# EUROPÄISCHE PATENTSCHRIFT

(11) **EP 2 512 842 B1**
(45) Veröffentlichungstag und Bekanntmachung des Hinweises auf die Patenterteilung: **05.03.2014**
(21) Anmeldenummer: 10776731.1
(22) Anmeldetag: 15.11.2010
(51) Int. Cl.: B60G 3/20, B60G 3/22, B60G 11/15, B60T 1/00

(54) **EINZELRADAUFHÄNGUNG EINES NICHT LENKBAREN RADES EINES ZWEISPURIGEN FAHRZEUGS**
SINGLE WHEEL SUSPENSION OF A NON-STEERABLE WHEEL OF A TWO-TRACK VEHICLE
SUSPENSION DE ROUE INDIVIDUELLE D'UNE ROUE NON DIRIGEABLE D'UN VÉHICULE À DEUX VOIES

(30) Priorität: 17.12.2009 DE 102009058728
(43) Veröffentlichungstag der Anmeldung: 24.10.2012
(73) Patentinhaber: Bayerische Motoren Werke Aktiengesellschaft, 80809 München (DE)
(72) Erfinder: DAVY, Elsa, 80637 München (DE); SCHLICHTE, Dirk, 80469 München (DE); MÜLLER, Jakob, 80689 München (DE); PAULUS, Bernhard, 81541 Muenchen (DE); PRUCKNER, Alfred, 81545 München (DE); KÖNIG, Roland, 82392 Habach (DE)
(86) Internationale Anmeldenummer: PCT/EP2010/067478
(87) Internationale Veröffentlichungsnummer: WO 2011/072967

(56) Entgegenhaltungen:
- EP-A1- 0 001 344
- EP-A1- 0 113 333
- FR-A- 846 448

## Beschreibung

Die Erfindung betrifft eine Einzelradaufhängung eines nicht lenkbaren Rades eines zweispurigen Fahrzeugs.

Zum technischen Umfeld wird beispielsweise auf die FR 846 448 A verwiesen.

Die Hinterachsen von Personenkraftwagen, deren Räder üblicherweise nicht lenkbar sind, haben bekanntlich einen großen Einfluss auf die Fahrstabilität und Fahrsicherheit des Fahrzeugs. Um in möglichst allen Fahrsituationen ein stabiles Fahrverhalten zu erreichen, sind moderne Hinterachsen kinematisch so ausgelegt, dass sie über dem Einfederweg zur Maximierung der übertragbaren Seitenkräfte relativ zur Karosserie einen negativen Radsturzwinkel erzeugen. Außerdem ist kinematisch über dem Einfederweg des Rades gegenüber dem Fahrzeug-Aufbau sowie elastokinematisch unter auf das Rad einwirkender Längskräfte (insbesondere durch Abbremsen) ein Vorspurwinkel am Rad gewünscht, um ein untersteuerndes Fahrverhalten zu erzeugen und ein plötzliches Ausbrechen des Hecks bei Lastwechsel zu verhindern. Durch ein derartiges grundsätzlich beschriebenes Verhalten zeichnen sich relativ aufwändige Achskonstruktionen bspw. in Form von Fünflenkerachsen oder Schräglenkerachsen aus, jedoch haben diese neben hohen Kosten den weiteren Nachteil, dass sie einen hohen Bauraumbedarf aufweisen. Demgegenüber etwas günstiger sind die dem Fachmann bekannten sog. Verbundlenkerachsen, die jedoch gewisse Nachteile im fahrdynamischen Verhalten aufweisen.

Es besteht somit Bedarf an einer fahrdynamisch vorteilhaften oder attraktiven Einzelradaufhängung, die sich durch geringen Bauraumbedarf und einfachen Aufbau auszeichnet (= Aufgabe der vorliegenden Erfindung). Die Lösung dieser Aufgabe besteht in einer Einzelradaufhängung eines nicht lenkbaren Rades eines zweispurigen Fahrzeugs mit zwei gegeneinander jeweils in einer Ebene verschwenkbaren Lenkern, wobei jede dieser Ebenen um nicht mehr als 10° (bzw. um nicht mehr als einen Winkel in der Größenordnung von 6° bis 10°) gegenüber der Fahrzeug-Längsrichtung und um nicht mehr als 10° (bzw. um nicht mehr als einen Winkel in der Größenordnung von 6° bis 10°) gegenüber der Vertikalen geneigt ist, und wobei weiterhin die folgenden Merkmale vorliegen: Es übernimmt der erste sich annähernd in Fahrzeug-Längsrichtung erstreckende Lenker auch die Funktion eines (dem Fachmann bekannten) Radträgers indem in einem Endabschnitt dieses Lenkers in einer Aufnahme ein Radlager befestigt ist, über das das Fahrzeug-Rad drehbar auf dem ersten Lenker gelagert ist. Ferner ist dieser erste Lenker mit seinem anderen Endabschnitt über eine sich in Konstruktionslage im wesentlichen in Vertikalrichtung erstreckende Pendelstütze am Fahrzeug-Aufbau abgestützt. Der andere sich im wesentlichen in Fahrzeug-Längsrichtung erstreckende zweite Lenker ist einerseits mit nur einem kinematischen Dreh-Freiheitsgrad gelenkig am Fahrzeug-Aufbau abgestützt und andererseits mit nur einem kinematischen Dreh-Freiheitsgrad gelenkig mit dem ersten Lenker zwischen dem besagten Radlager und dem genannten Befestigungspunkt der Pendelstützte verbunden. Das Rad ist nur durch diese beiden genannten Lenker gegenüber dem Fahrzeug-Aufbau geführt, d.h. mit Ausnahme eines gegebenenfalls vorgesehenen Verbindungsglieds zwischen dem ersten und dem zweiten Lenker (zur Darstellung der gelenkigen Verbindung zwischen diesen beiden Lenkern) ist kein weiterer radführender Lenker vorgesehen.

Vorteilhafte Weiterbildungen sind Inhalt der Unteransprüche, auf welche in der folgenden Beschreibung eines lediglich prinzipiell dargestellten Ausführungsbeispiels näher eingegangen wird. Mit den bislang angegebenen Merkmalen des unabhängigen Anspruchs erhält man eine äußerst kompakt bauende und somit wenig Bauraum insbesondere in Fahrzeug-Querrichtung betrachtet beanspruchende Einzelrad-Aufhängung, die folglich einen großen nutzbaren Freiraum zwischen den beiden Rädern einer Fahrzeug-Achse, insbesondere Hinterachse wegen der nicht lenkbaren Räder, zur Verfügung stellt. Geringe elastokinematische Lenkbewegungen des Rades können selbstverständlich erlaubt sein; ferner können sich mit einer Ein- und Ausfeder-Bewegung des Rades in Vertikalrichtung gegenüber dem Fahrzeug-Aufbau geringe gewünschte Änderungen der Spur (Vorspur) einstellen, und zwar aufgrund der genannten geringfügigen Neigung derjenigen Ebenen, in denen jeder der beiden Lenker kinematisch verschwenkbar ist. Diese Ebenen sind dabei wie angegeben gegenüber der Vertikalen und/oder gegenüber der Fahrzeug-Längsrichtung geneigt. Mit einer Verschwenkbewegung der Lenker in diesen Ebenen kann somit eine gewünschte Vorspur-Änderung und/oder Sturzänderung bei Radhub und/oder angreifenden Kräften und somit die gewünschte Fahrstabilität einer erfindungsgemäßen Einzelradaufhängung hergestellt werden.

Durch den soeben verwendeten Begriff "kinematisch verschwenkbar" sollen die dem Fachmann bekannten elastokinematischen Effekte ausdrücklich ausgeschlossen werden. Indem jeder der beiden Lenker kinematisch ausschließlich in einer Ebene verschwenkbar ist, besitzt jeder Lenker nur einen einzigen kinematischen Drehfreiheitsgrad. Neben diesem kinematischen Drehfreiheitsgrad können zwar bei Vorsehen entsprechender Gummilager unter entsprechender Krafteinwirkung auch geringfügige vom (jeweils) genannten Freiheitsgrad abweichende Bewegungen des (jeweiligen) Lenkers möglich sein, jedoch können diese nur geringfügigen anderweitigen Bewegungen ohne Einwirkung entsprechend großer Kräfte und ohne elastische Verformungen nur in einem dem Lenker zugeordneten Gummilager stattfinden.

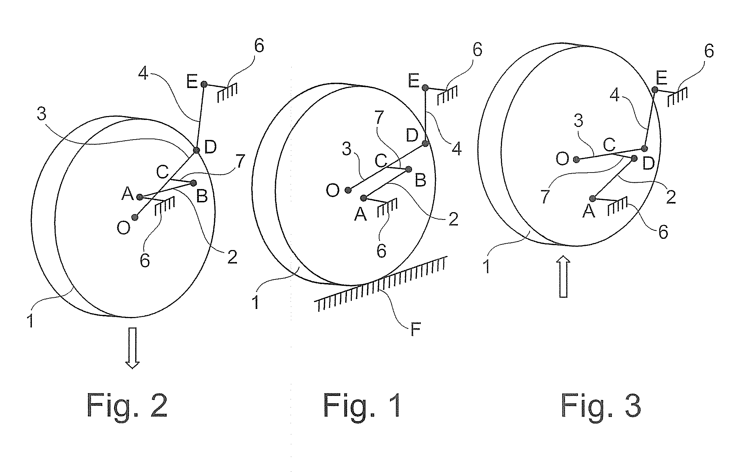

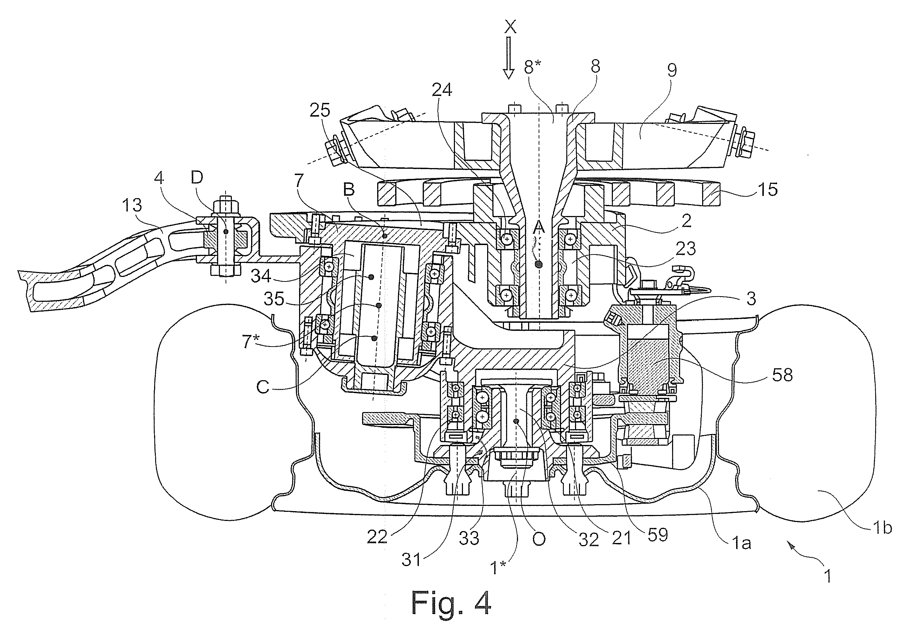

Im weiteren wird ein Ausführungsbeispiel anhand der beigefügten **Figuren 1** - **3** zunächst prinzipiell und daraufhin anhand der **Figuren 4 - 7** in einer detaillierten konstruktiven Ausführungsform erläutert. Dabei ist in den zunächst beschriebenen **Figuren 1 - 3** eine erfindungsgemäße Einzelradaufhängung in unterschiedlichen Einfederungs-Zuständen dargestellt, wobei **Fig.1** die Konstruktionslage des Rades gegenüber dem Fahrzeug-Aufbau zeigt, während **Fig.2** das Rad im gegenüber dem Fzg.-Aufbau ausgefederten Zustand und **Fig.3** das Rad im gegenüber dem Fzg.-Aufbau eingefederten Zustand zeigt.

Mit der Bezugsziffer 1 ist das linke hintere (und nicht lenkbare) Rad eines Personenkraftwagens gekennzeichnet, das in üblicher Weise über ein Radlager um den Punkt O drehbar gelagert ist, wobei im weiteren der Buchstabe "O" auch zur Kennzeichnung des besagten Radlagers verwendet wird.

Das Radlager O ist direkt oder indirekt an einem Endabschnitt eines ersten Lenkers 3 der Radaufhängung befestigt. Dieser erste Lenker 3 erstreckt sich in einer vertikalen Projektion (beispielsweise senkrecht auf die Fahrbahn F) annähernd in Fahrzeug-Längsrichtung und es ist dieser Lenker 3 auf noch näher erläuterte Weise derart geführt, dass dieser erste Lenker 3 in einer im wesentlichen vertikalen Ebene kinematisch verschwenkbar ist, die um nicht mehr als einen Winkel in der Größenordnung von 6° bis 10° gegenüber der Vertikalen geneigt ist um nicht mehr als um einen Winkel in der Größenordnung von 6° bis 10° gegenüber der Fahrzeug-Längsrichtung geneigt ist. Durch den Begriff "kinematisch verschwenkbar" sollen wie bereits erwähnt die dem Fachmann bekannten elastokinematischen Effekte ausgeschlossen werden, so dass die genannte Verschwenkbewegung mit nur einem kinematischen Dreh-Freiheitsgrad nur durch eine im weiteren noch erläuterte entsprechende gelenkige Anbindung realisiert ist. Konkret ist dabei der erste Lenker 3 entsprechend gelenkig mit einem zweiten Lenker 2 verbunden.

Der soeben genannte zweite Lenker 2 der erfindungsgemäßen Radaufhängung erstreckt sich ebenfalls in einer vertikalen Projektion (beispielsweise senkrecht auf die Fahrbahn F) im wesentlichen in Fahrzeug-Längsrichtung (d.h. in Richtung der Fzg.-Längsachse) und ist ebenfalls in einer im wesentlichen vertikalen Ebene verschwenkbar, die um nicht mehr als einen Winkel in der Größenordnung von 6° bis 10° gegenüber der Vertikalen geneigt ist um nicht mehr als um einen Winkel in der Größenordnung von 6° bis 10° gegenüber der Fahrzeug-Längsrichtung geneigt ist. Hierfür ist dieser zweite Lenker 2 ist mit einem Endabschnitt im Punkt A solchermaßen mit nur einem kinematischen Dreh-Freiheitsgrad um diesen Punkt A verschwenkbar gelenkig am Fahrzeug-Aufbau abgestützt oder angebunden. Der Punkt A verdeutlicht also die Lage des entsprechenden Gelenks, über welches der zweite Lenker 2 wie beschrieben verschwenkbar gegenüber dem (lediglich abstrakt dargestellten) Fzg.-Aufbau 6 geführt ist.

Der zweite Lenker 2 ist mit seinem anderen Endabschnitt über nur einen kinematischen Dreh-Freiheitsgrad gelenkig mit dem ersten Lenker 3 verbunden, wobei diese gelenkige Verbindung eine durch die Punkte B, C verlaufende Drehachse 7* bildet oder beschreibt. Diese gelenkige Verbindung kann über ein Verbindungsglied, beispielsweise einen Verbindungsbolzen 7 mit den Endpunkten B, C realisiert sein, wobei der erste Lenker 3 und der zweite Lenker 2 um diesen genannten Verbindungsbolzen 7, der sich aufgrund der beschrieben Orientierung und Bewegungsfreiheit dieser beiden Lenker 2, 3 im wesentlichen horizontal im wesentlichen in Fahrzeug-Querrichtung erstreckt, verschwenkbar sind. Der Punkt B verdeutlicht also die Lage eines entsprechenden Gelenks, über das der zweite Lenker 2 um die genannte Drehachse 7* verschwenkbar ist, und der Punkt C verdeutlicht die Lage eines entsprechenden Gelenks, um welches der erste Lenker 3 um die besagte Drehachse 7* wie beschrieben verschwenkbar ist.

Die soeben genannte gelenkige Verbindung zwischen den beiden Lenkern 3, 2 befindet sich auf dem ersten Lenker 3 in Fzg.-Längsrichtung betrachtet hier annähernd in dessen Mitte, jedoch kann dies auch anderweitig gestaltet sein. Wesentlich hingegen ist, dass der erste Lenker 3 mit seinem dem Radlager O gegenüber liegenden Endabschnitt in Vertikalrichtung betrachtet indirekt am Fahrzeug-Aufbau 6 abgestützt ist, wofür hier eine sog. Pendelstütze 4 vorgesehen ist. Diese Pendelstütze 4 ist am ersten Lenker 3 im Punkt D und am Fahrzeug-Aufbau 6 im Punkt E vorzugsweise jeweils über ein Kugelgelenk oder ein funktional gleichwirkendes Gelenk für eine solche im wesentlichen vertikal ausgerichtete Abstützung geeigneten Gummigelenkes abgestützt. Die Punkte D, E verdeutlichen dabei jeweils die Lage eines solchen Gelenks. Hiermit bindet diese Pendelstützte 4 nur einen (als Zahlwort) kinematischen Freiheitsgrad der Radaufhängung.

Die grundsätzliche Funktion dieser soweit beschriebenen Einzelradaufhängung besteht darin, dass das Rad 1 alleine durch die beiden genannten Lenker 3, 2 im Zusammenwirken mit der Pendelstütze 4 nur mit einem einzigen verbleibenden Freiheitsgrad kinematisch geführt ist, der eine Einfeder-Bewegung des Rades 1 gegenüber dem Fahrzeug-Aufbau 6 gemäß Figur 3 bzw. eine Ausfederbewegung des Rades 1 gegenüber dem Fzg.-Aufbau 6 gemäß Figur 2 erlaubt. Dabei ermöglicht die beschriebene und quasi scherenartige Anordnung der beiden Lenker 3, 2 eine relativ große Vertikalbewegung des Punktes O, d.h. des Radmittelpunktes oder Radlagers O, bei einer gleichzeitigen minimalen bzw. nur geringen Horizontalbewegung des Punktes D. Aufgrund der durch die Pendelstütze 4 angenäherten Geraden-Führung von Punkt D findet eine angenäherte Geraden-Führung des Punktes O zumindest in einem größeren Umgebungs-Bereich um die Konstruktionslage (gemäß Fig.1) statt.

Der besondere Vorteil dieser soweit vorgestellten Einzelradaufhängung liegt in deren geringem Bauraumbedarf insbesondere in Fahrzeug-Querrichtung betrachtet. Da kein radführender Lenker benötigt wird bzw. vorhanden ist, der sich in Fahrzeug-Querrichtung erstreckt bzw. in einer vertikalen Projektion um einen signifikanten Winkelbetrag gegenüber der Fahrzeug-Längsachse geneigt verläuft, wird der Bauraum zwischen den beiden Rädern einer diese Radaufhängung aufweisenden Achse nicht durch radführende Lenker eingeschränkt. Somit steht beispielsweise an einen PKW ausreichender Freiraum für einen Kofferraum oder für elektrische Energiespeicher zur Verfügung. (Dabei ist die Aussage, dass kein sich in Fahrzeug-Querrichtung erstreckender Lenker vorhanden ist, so zu verstehen, dass der beispielshaft genannte Verbindungsbolzen 7, mittels dessen die beiden sich im wesentlichen in Fzg.-Längsrichtung erstreckenden Lenker 3, 2 gelenkig im wesentlichen um die Fzg.-Querachse verschwenkbar wie bei einer Schere miteinander verbunden sind, kein radführender Lenker ist).

Eine besonders kompakte und daher vorteilhafte Anordnung ergibt sich, wenn zusätzlich zu den bislang beschriebenen Merkmalen der zweite Lenker 2 und der erste Lenker 3 mit seinem Abschnitt zwischen dem Radlager 0 und der gelenkigen Verbindung mit dem zweiten Lenker 2 in Konstruktionslage in einer seitlichen Projektion, d.h. in Fahrzeug-Querrichtung betrachtet, innerhalb der Felge des wie üblich einen mit Luft befüllten Reifen, welcher wie üblich auf dieser genannten Felge aufgezogen ist, aufweisenden Rades 1 liegen. Dabei wird mit üblicher Bauteil-Dimensionierung normalerweise nur der erste Lenker 3 zumindest teilweise tatsächlich innerhalb des von der Felge begrenzten Raumes angeordnet werden können, während der zweite Lenker 2 in Fzg.-Querrichtung betrachtet im wesentlichen außerhalb des von der Felge eingeschlossenen Raumes liegen wird. In Fahrzeug-Längsrichtung betrachtet jedoch kann der zweite Lenker 2 tatsächlich derart kurz und somit vorteilhaft kompakt gestaltet sein, dass er bei seitlicher Projektion in Fahrzeug-Querrichtung nicht über die Felge des Rades hinausragt.

In Ergänzung zu den bisherigen Erläuterungen der Einzelradaufhängung sei darauf hingewiesen, dass durch ein geringfügiges Schrägstellen der durch die Punkte B, C verlaufenden Drehachse 7* (oder des entsprechenden Verbindungsbolzens 7) der beiden Lenker 3, 2 gezielte Veränderungen des Rad-Sturzes oder der Rad-Spur des Rades 1 in Verbindung mit einer Einfeder- oder Ausfederbewegung des Rades 1 gegenüber dem Fzg.-Aufbau 6 erzeugt werden können. Hierfür müssen die beiden Lenker 3, 2 lediglich solchermaßen gestaltet und angeordnet sein, dass die besagte durch die Punkte B, C verlaufende Drehachse 7* zwar weiterhin im wesentlichen in Richtung der Fzg.-Querachse verläuft, dabei jedoch in Konstruktionslage (gemäß Fig.1) in einer vertikalen Projektion geringfügig gegenüber dieser Querachse geneigt verläuft und/oder in einer Projektion in Richtung der Fahrzeug-Längsachse geringfügig gegenüber der Horizontalen geneigt verläuft. In diesem Sinne ist auch die zuvor mehrmals genannte WinkelAbweichung der genannten Ebenen, in denen die Lenker 2, 3 verschwenkbar sind, gegenüber der Vertikalen bzw. gegenüber der Fahrzeug-Längsrichtung um einen Winkel nicht größer als im Bereich zwischen 6° und 10° liegend zu verstehen.

Im Sinne einer vorteilhaften Weiterbildung kann in der gelenkigen Verbindung zwischen dem ersten Lenker 3 und dem zweiten Lenker 2, d.h. im Bereich von deren gegenseitiger durch die Punkte B, C verlaufender Drehachse 7, ein die Bewegungen des Rades 1 gegenüber dem Fahrzeug-Aufbau 6 beeinflussendes Rotations-Dämpferelement und/oder ein entsprechendes Rotations-Federelement vorgesehen sein. Unter einem Rotations-Federelement ist dabei ein Federelement zu verstehen, das bei Krafteinwirkung in einer Richtung aufgewickelt wird, dabei Energie speichert und dann beim Nachlassen der Kraft zu oder in Richtung seiner Ausgangsposition zurückkehrt Ein Rotations-Dämpferelement dämpft bekanntlich eine Rotationsbewegung zweier Bauteile gegeneinander. Diese genannten Rotations-Feder- und/oder Dämpfer-Elemente können in besonders raumsparender Weise die Funktion einer üblichen Tragfeder (zwischen Rad 1 und Fzg.-Aufbau 6) bzw. eines Schwingungsdämpfers einer üblichen Radaufhängung übernehmen. Von Vorteil ist dabei, dass sich in dieser Drehachse 7 mit einer Einfeder-Bewegung oder Ausfeder-Bewegung des Rades 1 gegenüber dem Fzg.-Aufbau 6 relativ große Schwenkwinkel oder Drehwinkel der beiden Lenker 3, 2 gegeneinander einstellen. Alternativ oder zusätzlich kann jedoch auch in der gelenkigen Anbindung des zweiten Lenkers 2 am Fahrzeug-Aufbau 6, d.h. im Punkt A, ein die Bewegungen des Rades 1 gegenüber dem Fahrzeug-Aufbau 6 beeinflussendes Rotations-Dämpferelement und/oder Rotations-Federelement vorgesehen sein.

Es kann die gelenkige Verbindung zwischen dem ersten Lenker 3 und dem zweiten Lenker 2 und/oder die gelenkige Verbindung zwischen dem zweiten Lenker 2 und dem Fahrzeug-Aufbau (im Punkt A) in Form einer geringfügige elastokinematische Relativbewegungen erlaubenden Gummilagerung ausgeführt sein, so dass gezielt elastokinematische Effekte im Hinblick auf die Fahrdynamik und den Fahr-Komfort eines mit einer solchen Einzelradaufhängung oder einer entsprechenden Hinterachse versehenen Kraftfahrzeugs genutzt werden können.

Es wurde bereits erwähnt, dass die Anlenkung der Pendelstütze 4 am ersten Lenker 3 und am Fahrzeug-Aufbau 6 vorzugsweise derart gestaltet ist, dass diese Pendelstütze 4 nur einen kinematischen Freiheitsgrad der Radaufhängung bindet. Es kann jedoch diese sog. Pendelstütze 4 auch in Form eines Dreiecks-Lenkers mit verbreiterter Basis im Punkt E, d.h. im Anlenkbereich am Fzg.-Aufbau 6 ausgebildet sein, wodurch die auf das Rad 1 im Fahrbetrieb einwirkenden Querkräfte nicht nur im Punkt A gegenüber dem Fzg.-Aufbau abgestützt werden können, sondern zusätzlich im genannten Punkt E.

Es sei darauf hingewiesen, dass die vorgestellte Einzelradaufhängung eines nicht lenkbaren Fahrzeug-Rades sowohl an einer nicht angetriebenen Fahrzeug-Hinterachse als auch an einer angetriebenen Fahrzeug-Hinterachse umgesetzt sein kann; im Falle einer angetriebenen Hinterachse vorzugsweise unter Verwendung des in der deutschen Patentanmeldung 102009038424 dargestellten Antriebskonzepts.

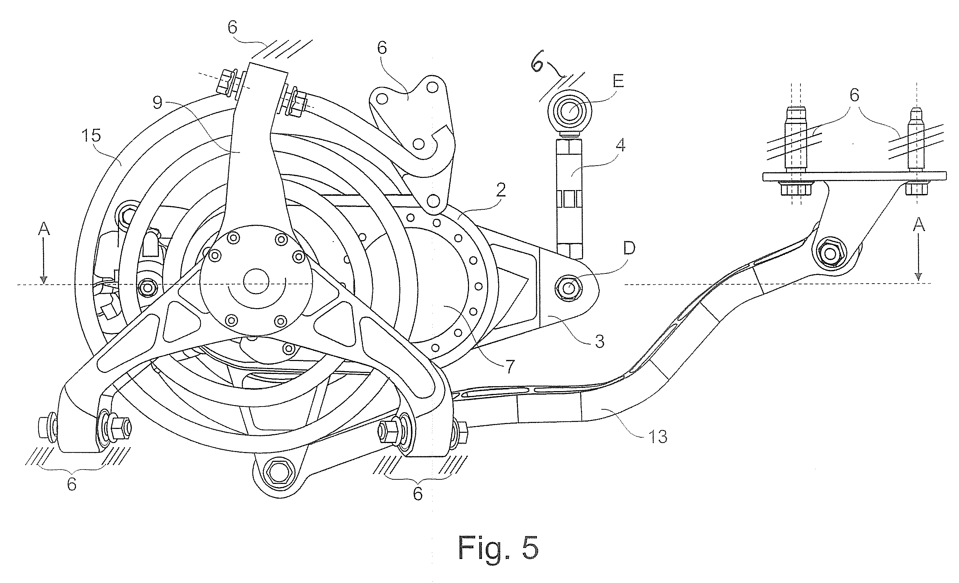

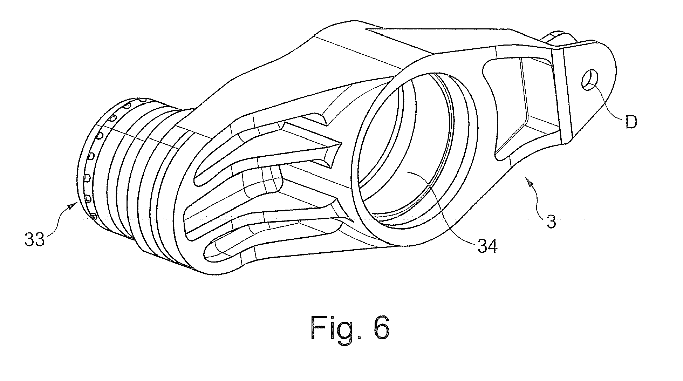

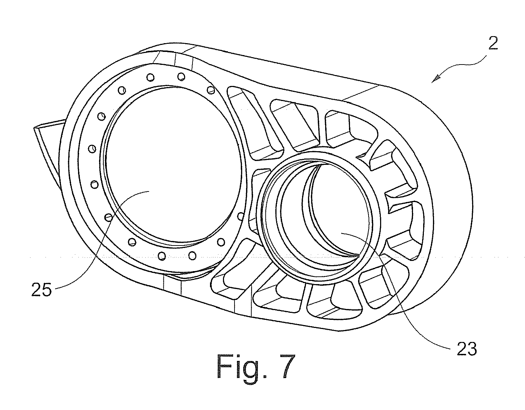

Im weiteren wird auf die **Figuren 4 -7** eingegangen, anhand derer ein konstruktiv detailliert ausgearbeitetes Ausführungsbeispiel bzw. dessen wesentlichen Elemente näher erläutert werden. Die Figur 5 zeigt eine seitliche Ansicht von außen (in Fzg.-Querrichtung betrachtet; = Ansicht X aus Fig.4), während in Figur 4 der Schnitt A-A aus Fig.5 dargestellt ist. In Figur 6 ist der erste Lenker und in Figur 7 der zweite Lenker perspektivisch dargestellt.

In **Figur 4** erkennt man zunächst das wie üblich aufgebaute Fahrzeug-Rad 1, bestehend aus dem Radkörper 1a und dem auf dessen Felge aufgezogenen Reifen 1b. Der Radkörper 1a ist mittels mehrerer Schrauben an einem Mitnehmerflansch 31 befestigt, der mittels eines Dorns 32 über ein zweireihiges Schrägkugellager 21 in einer kreiszylindrischen Aufnahme 33 des ersten Lenkers 3 gelagert ist. Die Längsachse 1* dieses Dorns 32 ist zugleich die Drehachse 1* des Rades 1. Der genannte erste Lenker 3 ist in **Figur 6** perspektivisch dargestellt. Indem dieser erste Lenker 3 über die soeben genannte kreiszylindrische Aufnahme 33 den Mitnehmerflansch 31 für den Radkörper 1a trägt, fungiert dieser erste Lenker 3 gleichzeitig als (dem Fachmann bekannter) Radträger, wobei der Punkt O aus den Figuren 1 - 3 im Zentrum des zweireihigen Schrägkugellagers 21 liegt.

Wie insbesondere aus **Figur 6** hervorgeht, weist der erste Lenker 3 in etwa in seinem Mittenbereich einen (weiteren) kreiszylindrischen Hohlraum 34 auf, dessen Zylinder-Achse die Drehachse 7* der gelenkigen Verbindung zwischen dem ersten Lenker 3 und dem zweiten Lenker 2 ist. In diesem Hohlraum 34 befindet sich der im Zusammenhang mit den Figuren 1 - 3 bereits erläuterte Verbindungsbolzen 7, vgl. **Figur 4****,** der hier mehrteilig aufgebaut ist. Mit Ausnahme des Hinweises, dass innerhalb dieses Verbindungsbolzens 7 auf geeignete Weise ein Rotationsdämpfer 35 integriert ist, mit Hilfe dessen Verschwenkbewegungen des ersten Lenkers 3 gegenüber dem zweiten Lenker 2 um die Drehachse 7* gedämpft werden, wird der Einfachheit halber auf den detaillierten Aufbau dieses Verbindungsbolzens 7 nicht näher eingegangen. Gut erkennbar ist jedoch in **Figur 4** die bereits erwähnte geringfügige Schrägstellung der Drehachse 7* gegenüber der Fahrzeug-Querrichtung, die in Richtung der Drehachse 1 * des Rades 1 verläuft. Ferner sind in **Figur 4** die Punkte B und C aus den Figuren 1 - 3 eingetragen, die auf der Drehachse 7* in dieser Projektion im wesentlichen in der Mitte des zweiten Lenkers 2 bzw. ersten Lenkers 3 liegen.

Der zweite Lenker 2 ist nicht nur in **Fig.4** erkennbar, sondern für sich alleine perspektivisch in **Figur 7** dargestellt. Ein größerer kreiszylindrischer Durchbruch 25 in diesem zweiten Lenker 2 dient zur Aufnahme des genannten Verbindungsbolzens 7, während in die kleinere kreiszylindrische Durchtrittsöffnung 23 dieses zweiten Lenkers 2 Schrägkugellager 24 eingesetzt sind, über die dieser zweite Lenker 2 auf einer Trägerwelle 8 um deren Achse 8* verschwenkbar gelagert ist. Der Punkt A aus den Figuren 1 - 3 liegt somit im Zentrum der hier zwei spiegelbildlich angeordneten Schrägkugellager 24. Die Trägerwelle 8 ihrerseits ist über einen Träger 9, dessen Gestalt besonders gut aus **Figur 5** hervorgeht, der jedoch auch andersartig gestaltet sein kann, an hier drei Stellen, nämlich jeweils mit dem Ende des jeweiligen der insgesamt drei Arme dieses Trägers 9, am nicht näher dargestellten Fahrzeug-Aufbau 6 befestigt. Diese Befestigung kann mittels Schrauben starr ausgeführt sein oder über Gummilager gestaltet sein, so dass elastokinematische Relativbewegungen ermöglicht werden. Zurückkommend auf den ersten Lenker 3 erkennt man besonders gut in **Figur 5****,** aber auch in den **Figuren 6** **und** **4** dessen Punkt D aus den Figuren 1 - 3, der im Zentrum des gabelförmigen freien Endes des ersten Lenkers 3 liegt. In diesem gabelförmigen Endabschnitt ist die Pendelstütze 4 abgestützt, die mit ihrem anderen Ende im Punkt E (vgl. **Fig.5****)** am nicht näher dargestellten Fahrzeug-Aufbau 6 abgestützt ist.

Aus den **Figuren 4** **und** **5** geht weiterhin die Anordnung eines in Form einer Spiralfeder ausgeführten Federelements 15 hervor, das als Tragfeder zwischen dem zweiten Lenker 2 und dem Fahrzeug-Aufbau 6 fungiert, d.h. über das der Fahrzeug-Aufbau 6 anteilig auf dem zweiten Lenker 2 (und über diesen sowie den ersten Lenker 3 auf dem Rad 1) abgestützt ist. Diese Spiralfeder 15 bzw. dieses Federelement 15 ist dabei ein sog. Rotations-Federelement, d.h. ein Federelement, das bei Krafteinwirkung in einer Richtung aufgewickelt wird, dabei Energie speichert und dann beim Nachlassen der Kraft zu oder in Richtung ihrer Ausgangsposition zurückkehrt. Ferner zeigt insbesondere **Figur 5** eine sog. Bremsenstütze 13, über die eine in **Fig.4** dargestellte sog. Bremssattelanbindung 12 am Fzg.-Aufbau 6 abgestützt ist. Über diese wie ersichtlich auf der den Radträger bildenden kreiszylindrischen Aufnahme 33 des ersten Lenkers 3 außenseitig über ein Dünnring-Schrägkugellager 22 um die Rad-Drehachse 1* drehbar gelagerte Bremssattelanbindung 12 ist in Zusammenwirken mit deren eine Rotationsbewegung der Bremssattelanbindung 12 um die Rad-Drehachse 1* verhindernde Abstützung über die Bremsenstütze 13 ein Bremssattel 58 an der Bremssattelanbindung 12 solchermaßen gelagert und abgestützt, dass dieser Bremssattel 58 in bekannter Weise mit einer ebenfalls am Mitnehmerflansch 31 befestigten Bremsscheibe 59 zusammen wirken kann, um das drehende Rad 1 abzubremsen. Eine solche Anbindung des Bremssattels bietet im Vergleich zu einer alternativ möglichenfesten Verschraubung zum Radträger mehr Freiheiten bei der Auslegung der kinematischen Kenngrößen, insbesondere während eines Bremsvorganges.

## Patentansprüche

1. Einzelradaufhängung eines nicht lenkbaren Rades (1) eines zweispurigen Fahrzeugs mit zwei gegeneinander jeweils in einer Ebene verschwenkbaren Lenkern, wobei jede dieser Ebenen um nicht mehr als 10° gegenüber der Fahrzeug-Längsrichtung und um nicht mehr als 10° gegenüber der Vertikalen geneigt ist,
und wobei der erste sich annähernd in Fahrzeug-Längsrichtung erstreckende Lenker (3) auch als Radträger fungiert, indem in einem Endabschnitt dieses Lenkers (3) in einer Aufnahme (32) ein Radlager (O 21) befestigt ist und wobei dieser erste Lenker (3) mit seinem anderen Endabschnitt (D) über eine sich in Konstruktionslage im wesentlichen in Vertikalrichtung erstreckende Pendelstütze (4) am Fahrzeug-Aufbau (6) abstützbar ist,
und wobei der andere sich im wesentlichen in Fahrzeug-Längsrichtung erstreckende zweite Lenker (2) einerseits mit nur einem kinematischen DrehFreiheitsgrad gelenkig am Fahrzeug-Aufbau (6) abstützbar und andererseits mit nur einem kinematischen Dreh-Freiheitsgrad gelenkig mit dem ersten Lenker (3) zwischen dem Radlager (O) und dem Befestigungspunkt (D) der Pendelstützte (4) verbunden ist,
und wobei mit Ausnahme eines die gelenkige Verbindung zwischen dem ersten Lenker (3) und dem zweiten Lenker (2) herstellenden Verbindungsglieds (7) kein weiterer radführlender Lenker vorgesehen ist,
**dadurch gekennzeichnet, dass** die Drehachse (7*) der gelenkigen Verbindung zwischen dem ersten Lenker (3) und dem zweiten Lenker (2) in Konstruktionslage geringfügig gegenüber der Horizontalen und/oder gegenüber der Fahrzeug-Querrichtung geneigt ist.

2. Einzelradaufhängung nach Anspruch 1,
**dadurch gekennzeichnet, dass** der zweite Lenker (2) und der erste Lenker (3) mit seinem Abschnitt zwischen dem Radlager (0) und der gelenkigen Verbindung mit dem zweiten Lenker (2) in Konstruktionslage in einer seitlichen Projektion (in Fahrzeug-Querrichtung) innerhalb der Felge des Rades (1) liegen.

3. Einzelradaufhängung nach Anspruch 1 oder 2,
**dadurch gekennzeichnet, dass** in der gelenkigen Verbindung zwischen dem ersten Lenker (3) und dem zweiten Lenker (2) ein die Bewegungen des Rades (1) gegenüber dem Fahrzeug-Aufbau (6) beeinflussendes Rotations-Dämpferelement (35) und/oder Rotations-Federelement vorgesehen ist.

4. Einzelradaufhängung nach einem der vorangegangenen Ansprüche, **dadurch gekennzeichnet, dass** in der gelenkigen Anbindung des zweiten Lenkers (2) am Fahrzeug-Aufbau (6) ein die Bewegungen des Rades (1) gegenüber dem Fahrzeug-Aufbau (6) beeinflussendes Rotations-Dämpferelement und/oder Rotations-Federelement (15), vorzugsweise in Form einer Spiralfeder (15), vorgesehen ist.

5. Einzelradaufhängung nach einem der vorangegangenen Ansprüche, **dadurch gekennzeichnet, dass** die gelenkige Verbindung zwischen dem ersten Lenker (3) und dem zweiten Lenker (2) und/oder zwischen dem zweiten Lenker (2) und dem Fahrzeug-Aufbau (6) eine elastokinematische Relativbewegungen erlaubende Gummilagerung enthält.

6. Einzelradaufhängung nach einem der vorangegangenen Ansprüche, **dadurch gekennzeichnet, dass** der zweiten Lenker (2) drehbar auf einem Träger (9) gelagert ist, der über eine elastokinematische Relativbewegungen erlaubende Gummilagerung am Fahrzeug-Aufbau (6) befestigt ist.

7. Einzelradaufhängung nach einem der vorangegangenen Ansprüche, **dadurch gekennzeichnet, dass** die Anlenkung der Pendelstütze (4) am ersten Lenker (3) und am Fahrzeug-Aufbau (6) derart gestaltet ist, dass diese Pendelstütze (4) nur einen kinematischen Freiheitsgrad der Radaufhängung bindet.

8. Einzelradaufhängung nach einem der Ansprüche 1 - 7,
**dadurch gekennzeichnet, dass** die Pendelstütze (4) in Form eines Dreiecks-Lenkers mit verbreiteter Basis im Anlenkpunkt (E) am Fahrzeug-Aufbau (6) ausgebildet ist, wodurch die auf das Rad (1) im Fahrbetrieb einwirkenden Querkräfte zusätzlich in diesem genannten Punkt (E) abgestützt werden.

9. Einzelradaufhängung nach einem der vorangegangenen Ansprüche, **dadurch gekennzeichnet, dass** an der Radlager-Aufnahme (32) des ersten Lenkers (3) eine Bremssattelanbindung (12) gelagert ist, die über eine Bremsenstütze (13) am Fahrzeug-Aufbau (6) abgestützt ist und die einen Bremssattel (58) trägt, der mit einer Bremsscheibe (59) zusammen wirkt

## Claims

1. A single wheel suspension of a non-steerable wheel (1) of a two-track vehicle with two links, which can be pivoted relative to one another in each case in a plane, wherein each of these planes is inclined by no more than 10° relative to the longitudinal direction of the vehicle and by no more than 10° relative to the vertical, and wherein the first link (3) extending approximately in the longitudinal direction of the vehicle also acts as a wheel carrier, in that a wheel bearing (O 21) is fastened in an end portion of this link (3) in a receiver (32) and wherein this first link (3) can be supported by its other end portion (D) by means of a pendulum support (4) extending substantially in the vertical direction in the construction position on the vehicle body (6), and wherein the other second link (2) extending substantially in the longitudinal direction of the vehicle, on the one hand, can only be supported with one kinematic degree of rotational freedom in an articulated manner on the vehicle body (6) and, on the other hand, is connected with only one kinematic degree of rotational freedom in an articulated manner to the first link (3) between the wheel bearing (O) and the fastening point (D) of the pendulum support (4), and wherein no further wheel-guiding link is provided with the exception of a connecting member (7) producing the articulated connection between the first link (3) and the second link (2), **characterised in that** the rotational axis (7*) of the articulated connection between the first link (3) and the second link (2) is slightly inclined relative to the horizontal and/or relative to the transverse direction of the vehicle in the construction position.

2. A single wheel suspension according to claim 1, **characterised in that** the second link (2) and the first link (3), with its portion between the wheel bearing (O) and the articulated connection to the second link (2), lie inside the rim of the wheel (1) in the construction position in a lateral projection (in the transverse direction of the vehicle).

3. A single wheel suspension according to claim 1 or 2, **characterised in that** in the articulated connection between the first link (3) and the second link (2), a rotational damper element (35) and/or rotational spring element influencing the movements of the wheel (1) relative to the vehicle body (6) is provided.

4. A single wheel suspension according to any one of the preceding claims, **characterised in that** a rotational damper element and/or rotational spring element (15), preferably in the form of a helical spring (15), influencing the movements of the wheel (1) relative to the vehicle body (6) is provided in the articulated attachment of the second link (2) on the vehicle body (6).

5. A single wheel suspension according to any one of the preceding claims, **characterised in that** the articulated connection between the first link (3) and the second link (2) and/or between the second link (2) and the vehicle body (6) contains a rubber mount allowing elastokinematic relative movements.

6. A single wheel suspension according to any one of the preceding claims, **characterised in that** the second link (2) is rotatably mounted on a carrier (9), which is fastened on the vehicle body (6) by means of a rubber mount allowing elastokinematic relative movements.

7. A single wheel suspension according to any one of the preceding claims, **characterised in that** the articulation of the pendulum support (4) on the first link (3) and on the vehicle body (6) is designed such that this pendulum support (4) binds only one kinematic degree of freedom of the wheel suspension.

8. A single wheel suspension according to any one of claims 1 to 7, **characterised in that** the pendulum support (4) is in the form of a triangular link with a widened base at the articulation point (E) on the vehicle body (6), whereby the transverse forces acting on the wheel (1) when the vehicle is travelling are additionally supported at this point (E) mentioned.

9. A single wheel suspension according to any one of the preceding claims, **characterised in that** a brake calliper attachment (12) is mounted on the wheel bearing receiver (32) of the first link (3), said brake calliper attachment being supported by means of a brake support (13) on the vehicle body (6) and carrying a brake calliper (58) that interacts with a brake disc (59).

## Revendications

1. Suspension de roue individuelle d'une roue non directrice (1) d'un véhicule à deux traces comportant deux bras de suspension pivotant respectivement l'un par rapport à l'autre dans un plan, chacun de ces deux plans n'étant pas inclinés de plus de 10° par rapport à la direction longitudinale du véhicule et de plus de 10° par rapport à la verticale, et le premier bras de suspension (3) qui s'étend essentiellement dans la direction longitudinale du véhicule faisant aussi office de support de roue dans la mesure où un palier de roue (O 21) est fixé dans un segment d'extrémité de ce bras de suspension (3), dans un logement (32), et ce premier bras de suspension (3) s'appuyant par son autre segment d'extrémité (D) contre la carrosserie (6) du véhicule par l'intermédiaire d'un support pendulaire (4), s'étendant essentiellement verticalement dans la position de construction tandis que l'autre ou second bras de suspension (2) qui s'étend essentiellement dans la direction longitudinale du véhicule d'une part s'appuie sur la carrosserie (6) du véhicule en étant articulée sur celle-ci avec un seul degré de liberté de rotation cinématique, et d'autre part est articulé avec un seul degré de liberté cinématique sur le premier bras de suspension (3) entre le palier de roue (O) et le point de fixation (D) du support pendulaire (4), et, à l'exception d'un organe de liaison (7) permettant d'obtenir la liaison articulée du premier bras de suspension (3) et du second bras de suspension (2) aucun autre bras de suspension de guidage de roue n'étant prévu,
**caractérisée en ce que**
l'axe de rotation (7*) de la liaison articulée entre le premier bras de suspension (3) et le second bras de suspension (2) est faiblement incliné par rapport à l'horizontale et/ ou par rapport à la direction transversale du véhicule dans la position de construction.

2. Suspension de roue individuelle conforme à la revendication 1,
**caractérisée en ce que**
le second bras articulé (2) et le premier bras articulé (3) sont positionnés, par leurs segments situés entre le palier de roue (O) et la liaison articulée avec le second bras de suspension (2), dans la position de construction, en projection latérale (dans la direction transversale du véhicule) à la partie interne de la jante de la roue (1).

3. Suspension de roue individuelle conforme à la revendication 1 ou 2,
**caractérisée en ce que**
dans la liaison articulée entre le premier bras de suspension (3) et le second bras de suspension (2) il est prévu un élément amortisseur en rotation (35) et/ou un élément élastique en rotation agissant sur les mouvements de la roue (1) par rapport à la carrosserie (6) du véhicule.

4. Suspension de roue individuelle conforme à l'une des revendications précédentes,
**caractérisée en ce que**
dans la liaison articulée du second bras de suspension (2) sur la carrosserie (6) du véhicule, il est prévu un élément amortisseur en rotation et/ou un élément élastique en rotation (15) de préférence réalisé sous la forme d'un ressort spiral (15) agissant sur les mouvements de la roue (1) par rapport à la carrosserie (6) du véhicule.

5. Suspension de roue individuelle conforme à l'une des revendications précédentes,
**caractérisée en ce que**
la liaison articulée entre le premier bras de suspension (3) et le second bras de suspension (2) et/ou entre le second bras de suspension (2) et la carrosserie (6) du véhicule renferme un palier en caoutchouc permettant des mouvements relatifs élasto-cinématiques

6. Suspension de roue individuelle conforme à l'une des revendications précédentes,
**caractérisée en ce que**
le second bras de suspension (2) est logé mobile en rotation sur un support (9) qui est fixé sur la carrosserie (6) du véhicule par l'intermédiaire d'un palier en caoutchouc permettant des mouvements relatifs élasto-cinématiques.

7. Suspension de roue individuelle conforme à l'une des revendications précédentes,
**caractérisée en ce que**
l'articulation du support pendulaire (4) sur le premier bras de suspension (3) et sur la carrosserie (6) du véhicule est réalisée de sorte que ce support pendulaire (4) n'engage qu'un seul degré de liberté cinématique de la suspension de roue.

8. Suspension de roue individuelle conforme à l'une des revendications 1 à 7,
**caractérisée en ce que**
le support pendulaire (4) est réalisé sous la forme d'un bras de suspension triangulaire ayant une base élargie au niveau de son point d'articulation (E) sur la carrosserie (6) du véhicule, de sorte que les forces transversales agissant sur la roue (1) lors du déplacement s'appliquent en outre sur ce point (E).

9. Suspension de roue individuelle conforme à l'une des revendications précédentes,
**caractérisée en ce que**
dans le logement (32) du palier de roue du premier bras de suspension (3) est logée une liaison d'étrier de frein (12) qui s'appuie contre la carrosserie (6) du véhicule par l'intermédiaire d'un support de frein (13) et qui porte un étrier de frein (58) qui coopère avec un disque de frein (59).
